# EUROPÄISCHE PATENTSCHRIFT

(11) **EP 1 511 946 B1**
(45) Veröffentlichungstag und Bekanntmachung des Hinweises auf die Patenterteilung: **13.12.2006**
(21) Anmeldenummer: 03740145.2
(22) Anmeldetag: 23.05.2003
(51) Int. Cl.: F16D 23/06

(54) **RASTELEMENT**
DETENT ELEMENT
ELEMENT D'ARRET

(30) Priorität: 07.06.2002 DE 10225269
(43) Veröffentlichungstag der Anmeldung: 09.03.2005
(73) Patentinhaber: Schaeffler KG, 91074 Herzogenaurach (DE)
(72) Erfinder: LEHMEIER, Manfred, 90475 Nürnberg (DE); SPOERL, Marcus, 91126 Rednitzhembach (DE)
(86) Internationale Anmeldenummer: PCT/EP2003/005384
(87) Internationale Veröffentlichungsnummer: WO 2003/104670

(56) Entgegenhaltungen:
- EP-A- 0 870 941
- DE-A- 19 941 794
- FR-A- 1 181 512
- PATENT ABSTRACTS OF JAPAN Bd. 0072, Nr. 54 (M-255), 11. November 1983 (1983-11-11) & JP 58 137627 A (FUJI TEKKOSHO:KK), 16. August 1983 (1983-08-16)

## Beschreibung

Die Erfindung betrifft ein Rastelement zum Verrasten an einem beweglichen Getriebeteil in wenigstens einer Stellposition, wobei das Rastelement einen aus Blech geformten Grundkörper aufweist, an dem sich wenigstens ein bügelartig ausgebildetes Federelement abstützt und wobei das Federelement elastisch in eine Druckrichtung gegen das Getriebeteil vorspannt.

Es ist dem Fachmann bekannt, dass derartige Rastelemente in verschiedenen Anwendungen der Schaltgetriebe von Kraftfahrzeugen eingesetzt sind. Sie arretieren z. B. als Arretierungen bewegliche Getriebeelemente in Schalt- oder Wählpositionen, so dass diese Getriebeelemente, beispielsweise trotz Erschütterungen während des Fahrbetriebs, in den vorgegebenen Stellpositionen verbleiben. Derartige Getriebeelemente sind z. B. dreh- und längsverschiebbare Schaltwellen, längsverschiebbare Schaltschienen und schwenkbare Schaltbolzen. Die Arretierungen sind dabei gegen eine Rastkontur vorgespannt, deren Oberfläche in der Regel durch die Kontur eines Rastgebirges mit Erhöhungen und Vertiefungen beschrieben ist. In den vorgegebenen Wähl- bzw. Schaltpositionen verrastet die Arretierung in einer der Vertiefungen des Rastgebirges und hält das Getriebeelement in dieser Position. In der Vergangenheit war die Fachwelt bestrebt in handgeschalteten Getrieben, besonders für die letztgenannten Anwendungen, Arretierungen einzusetzen, bei denen in aufwändiger Weise längsbeweglich wälzgelagerte Arretierbolzen mit einer kugelgelagerten Arretierkugel in einem Gehäuse der Arretierung eingesetzt sind. Mit dem Einsatz derartig wälzgelagerter Arretierungen sollte und soll das von der Bedienperson am Handschalthebel beim Wählen und Schalten deutlich spürbare an der Oberfläche der gegen die Arretierung bewegten Getriebeelemente erzeugte Hakeln gemindert werden. Mit dem immer häufigeren Einsatz von hilfskraftbetätigten bzw. automatisierten Schaltgetrieben ist die Verwendung derartiger relativ kostspieliger Arretierungen oftmals nicht mehr notwendig. In ihrer Ausführung einfachere, jedoch robuste und kostengünstig herzustellende Arretierungen sind zunehmend gefragt.

Arretierungen sind weiterhin auch in den bekannten Schaltkupplungen vorgesehen, die für das drehfeste Verbinden von Gangrädern mit einer Getriebewelle beim Schalten von Gängen eingesetzt sind. Die Schaltmuffe dieser Schaltkupplungen ist auf dem Schaltmuffenträger zumeist in einer neutralen Position mittels einer Arretierung gehalten. In dieser Stellposition sind gegen die Schaltmuffe drei bis vier am Umfang des Schaltmuffenträgers angeordnete und an dem Schaltmuffenträger gehaltene Arretierungen vorgespannt. Dazu stützen sich die Arretierungen an dem Schaltmuffenträger ab und greifen in Rastvertiefungen an der Schaltmuffe. Weiterhin sind in als Synchronkupplung ausgebildeten Schaltkupplungen auch Rastelemente in Form von Druckstücken eingesetzt. Die Druckstücke sitzen längsverschiebbar in einem Schaltmuffenträger. Die in dieser Anwendung eingesetzten Arretierungen oder Druckstücke bzw. Kombinationen aus Arretierungen und Druckstücken sind relativ einfach gestaltet und unter anderem auch durch blattfederartige bzw. bügelartige flache Federelemente gebildet. Flache, bügelartig gestaltete Federelement sind gegenüber Schraubenfedern oftmals bevorzugt, da sie bei flacher Bauhöhe relativ viele Variationen in der Auslegung der Federcharakteristik zulassen. Der Schaltmuffenträger ist mit Aufnahmen geringer radialer Tiefe für diese Arretierungen versehen. Die Stabilität des Trägers, insbesondere die Steifigkeit seiner Körperstruktur ist aufgrund der Ausnehmungen geringer Tiefe nur relativ geringfügig nachteilig beeinflusst.

Ein Rastelement in Form eines Druckstücks der gattungsbildenden Art ist in EP 0 870 941 A1 beschrieben. An einem Grundkörper aus Blech ist ein elastisches Federelement ausgebildet. Das elastische Federelement ist aus dem flachen Blech des Grundkörpers geformt, steht von dem Grundkörper ab und ist bügelartig gebogen. Der Grundkörper stützt sich an einem Schaltmuffenträger ab, wobei das Federelement gegen eine auf dem Schaltmuffenträger sitzende Schaltmuffe vorgespannt und in einer Rastvertiefung verrastet ist. Bei einer Schaltbewegung nimmt die Schaltmuffe das Druckstück zunächst in Richtung des zu schaltenden Gangrades längs mit, wodurch der bekannte Synchronisationsprozess eingeleitet ist. Größerer axialer Widerstand auf das Rastelement bei weiter in Richtung des Gangrades längsbewegter Schaltmuffe zwingt das Federelement aus der Rastvertiefung an der Schaltmuffe in Richtung des Grundkörpers einzufedern. Das Federelement schnappt wieder in die Rastvertiefung ein, wenn die Schaltmuffe in die neutrale Stellposition zurückgeführt wird. Nachteilig an der an sich zufriedenstellenden Lösung ist, dass das Rastelement, insbesondere wenn diese auch als Druckstück eingesetzt ist, nicht robust genug für den Einsatz in automatisierten Schaltgetrieben ist. Die Schaltung ist beispielsweise elektromotorisch betätigt. Dabei findet der Synchronisations- und Schaltvorgang vergleichsweise zu handkraftbetätigten Schaltvorgängen in wesentlich kürzeren Zeiträumen und ohne das durch die Bedienperson üblicherweise aufgebrachte Feingefühl statt. Die Einzelteile der Schaltkupplung treffen z. B. schlagartig aufeinander, wodurch das aus Federstahl gefertigte Rastelement gefährdet ist.

### Zusammenfassung der Erfindung

Die Aufgabe der Erfindung ist es, ein Rastelement in Form eines Druckstücks oder einer Arretierung zu schaffen, das robust ist, bei dem die Vorteile des Einsatzes von flachen Federelementen berücksichtigt sind und das sich kostengünstig herstellen lässt.

Diese Aufgabe ist nach dem Gegenstand des kennzeichnenden Teils des Anspruchs 1 dadurch gelöst, dass der Grundkörper des Rastelementes schalenförmig mit einem quer zur Druckrichtung ausgerichteten Boden und mit von dem Boden abgewinkelten abgehenden Wänden ausgebildet ist, wobei der Grundkörper wenigstens teilweise mit einer dem Boden in Druckrichtung gegenüberliegenden Kappe abgedeckt ist. Die Kappe weist eine von dem Boden wegweisende aus der Kappe in die Druckrichtung an dem Rastelement nach außen hervorstehende kalottenförmige Auswölbung auf und ist zu dem Grundkörper in Druckrichtung längs begrenzt beweglich an dem Grundkörper gehalten. Das Federelement ist von dem Grundkörper und der Kappe wenigstens teilweise eingekapselt, wobei das Federelement, sich in dem Rastelement an dem Grundkörper abstützend, gegen die Kappe vorgespannt ist.

Durch den schalen- bzw. wannenförmigen Grundkörper und die öffnüngsseitig des Grundkörpers über den Grundkörper gestülpte sowie in der Regel auch schalenförmig ausgebildete Kappe ist die bzw. sind die Druckfeder(n) in der Arretierung eingekapselt. Der Boden der mit der Öffnung in Richtung Grundkörper weisenden schalenförmigen Kappe weist die kalottenförmige Ausformung auf. Die von dem Boden abgehenden Seitenwände bilden den Rand der Kappe. Der Rand der Kappe ist über den Grundkörper gestülpt. Die Kappe ist alternativ zu der vorgenannten Anordnung auch mit dem Rand in die in Druckrichtung des Federelementes gewandte Öffnung des Grundkörpers einsetzbar. Der Grundkörper übergreift und umgreift im zuletzt genannten Beispiel den Rand der Kappe außen mit einem vorzugsweise umlaufenden Rand seiner Wände. Der Grundkörper und das Federelement sind separat gefertigte Einzelteile mit aneinander angepasster hohlzylindrischer Form oder weisen bevorzugt eine einseitig geöffnete hohle, sowie annähernd quader-, würfel- und trapezförmige bzw. eine andere beliebige geometrische hohle Gestalt auf. Sowohl der Grundkörper als auch die Kappe sind einfache und insbesondere in der Großserien- und Massenproduktion kostengünstig herstellbare Umformteile aus Blech. Der Grundkörper und die Kapsel schützen während des Schaltprozesses das Federelement vor Kräften, die sich nachteilig auf die Lebensdauer und Funktion des Federelementes auswirken könnten. Das ist insbesondere dann von Vorteil, wenn die Rastelemente als Druckstücke in den vorgenannten Schaltkupplungen mit Synchronisationen eingesetzt sind. Die Kappe ersetzt den üblicherweise in den bekannten Arretierungen bzw. Druckstücken eingesetzten Rastbolzen und läuft mit der kalottenförmigen Auswölbung an der Rastkontur des Rastgebirges bzw. an der Verzahnung der Schaltmuffe ab bzw. verrastet in den dafür bestimmten Rastvertiefungen der Schaltmuffe.

Die relativ kleinen und bei ihrer Montage unhandlichen Federelemente sind verliersicher in dem Rastelement richtungsorientiert eingekapselt und damit einfacher und sicherer zu montieren. In die durch die Kappe und den Grundkörper gebildete Hülle der Rastelemente sind, bei unveränderter Abmessung der Hülle, Federelemente mit den unterschiedlichsten Federcharakteristiken einsetzbar. Damit ist das Rastelement bei gleicher Außenabmessung an die unterschiedlichsten anwendungsspezifischen Anforderungen anpassbar. Mit einer derartigen Mehrfachverwendung von Grundkörper und Kappe einer Abmessung in verschiedenen Anwendungen eines oder mehrerer Getriebe sind die Kosten für die Herstellung des Rastelementes und der Aufwand für Verpakkung, Transport und Logistik so gering wie möglich gehalten.

Die Federelemente sind vorzugsweise Federbügel mit zwei Schenkeln, wobei die Schenkel wiederum bevorzugt an der Kappe angreifen und gegen die Kappe vorgespannt sind. Der zwischen den Enden der Schenkel liegende Bügel stützt sich mit seinem dem Boden des Grundkörpers zugewandten Rücken an dem Grundkörper ab. Die Schenkel liegen an der Kappe an sich seitlich der kalottenförmigen Auswölbung anschließenden und quer zu der Druckrichtung des Federelementes ausgerichteten sowie in der Regel zu dem Boden des Grundkörpers planparallelen Stützflächen des Bodens der Kappe ab.

Die Lage und Ausrichtung der Federelemente in dem Druckstück ist durch eine Führung bzw. eine Befestigung dieser in dem Grundkörper abgesichert. Dazu ist die Feder in dem Grundkörper beispielsweise von zwei sich gegenüberliegenden Seitenwänden des Grundkörpers eingefasst, so dass ein Verkippen und Verdrehen der Feder aus ihrer vorbestimmten Lage nicht möglich ist. Weiter ist vorgesehen, dass der Federbügel sich auf einem in Richtung der Kappe aus dem Material des Bodens durchgestellten und dabei dornartig in die Arretierung ragenden hohlen Ansatz sitzt. Der Federbügel weist dazu ein Loch auf, mit dem dieser auf den Ansatz aufgesteckt oder aufgepresst ist. Gleichzeitig ist die Feder wiederum zwischen zwei sich gegenüberliegenden Seitenwänden des Grundkörpers seitlich geführt und gestützt.

Mit einer anderen Ausgestaltung der Erfindung ist vorgesehen, dass das Federelement, besonders in der Ausführung eines Federbügels, auf geeignete Weise an der in Richtung der Kappe weisenden Innenfläche des Bodens befestigt ist. Das Federelement ist vorzugsweise mittels einer Nietverbindung an dem Boden angebracht. Ein seitliches Führen der Feder durch die Seitenwände des Grundkörpers ist dann nicht mehr notwendig, wodurch die Arretierung in beliebigen anwendungsspezifisch angepassten Abmessungen herstellbar ist und beispielsweise auch zwei oder mehr der Federelemente parallel nebeneinander in dem Grundkörper angeordnet werden können. Als Nieten für die Nietverbindung sind alle geeigneten Niete, z. B. einteilige Niete und Hohl- bzw. Rohrniete einsetzbar, die vorzugsweise in Blechnietung verarbeitet sind. Der Einsatz von Hohlnieten ist besonders vorteilhaft, wenn der Hohlniet ein aus dem Boden des Druckstückes in das Rastelement durchgestellter sowie einteilig mit dem Material des Bodens durchgestellter Ansatz ist. Das Federelement wird bei seiner Montage mit einem dem Durchmesser des Ansatzes angepassten Loch auf den Ansatz bis auf den Boden aufgeschoben. Das an der von dem Boden des Grundkörpers abgewandten Seite des Federelementes über das Federelement hinausragende Ende des Ansatzes ist quer zur Druckrichtung der Feder aufgeweitet bzw. umgelegt. Der Ansatz liegt dann an der dem Boden abgewandten Seite des Federbügels zumindest teilweise an und hält das Federelement am Boden fest.

Die Vorspannung der auf die Kappe wirkenden Feder(n) ist einerseits durch die Bauart der Feder, durch die Länge der Schenkel und durch die Dicke des Bleches aus Federstahl beeinflusst. Andererseits ist die Vorspannung auch durch die Bauhöhe des Rastelementes und durch den freien Stützabstand der Feder zwischen dem Grundkörper und den Stützflächen der Kappe regelbar. Insbesondere dann, wenn die Bauhöhe des Rastelementes aus anderen funktionellen Gründen festgelegt ist und dabei der Stützabstand in dem Rastelement für die Feder(n) zu groß ist, ist der Stützabstand durch eine podestartig aus dem Boden in das Rastelement ragende Ausformung am Boden des Druckstückes einstellbar.

Die Kappe ist in Druckrichtung des Federelementes beweglich an dem Grundkörper befestigt. Es ist von Vorteil, die Kappe und den Grundkörper an den zueinander gewandten Rändern mit quer zur Druckrichtung der Feder abgehenden Formelementen wie Borden oder Noppen zu versehen, die sich in Druckrichtung gesehen hintergreifen und nach dem Erreichen des maximalen Hubes der Kappe in Druckrichtung aneinander liegen, wodurch die Kappe an dem Grundkörper gehalten ist. Eine Ausgestaltung der Erfindung sieht dazu weiter vor, dass die Kappe einen entgegengesetzt zur Druckrichtung abgewinkelten und die Wände quer zur Längsrichtung zumindest teilweise umfassenden Rand aufweist. Aus dem Rand steht, jeweils an einander gegenüberliegenden Wänden der Kappe, wenigstens jeweils ein Noppen quer zur Druckrichtung hervor. Jeder der Noppen greift in jeweils eine in Druckrichtung ausgerichtete und verlaufende sowie in Druckrichtung auf die Kappe zu an ihrem Ende verschlossene nutförmige Vertiefung an jeweils einer der Wände des Grundkörpers ein, wodurch die Kappe zu dem Grundkörper in Richtung des Bauteils längs begrenzt beweglich an dem Grundkörper gehalten ist. Die in Druckrichtung ausgerichteten und an sich einander gegenüberliegenden Wänden des Grundkörpers ausgebildeten Nuten sind an ihrem zur Kappe weisenden Ende so verschlossen, dass der jeweilige Noppen nach dem Erreichen des maximalen Hubes der Kappe in Druckrichtung an dem verschlossenen Ende der jeweiligen Nut anliegt. Denkbar ist auch, dass der Grundkörper mindestens zwei einander gegenüberliegenden Wänden mit nach außen quer zur Druckrichtung aus den Wänden hervorstehenden Noppen versehen ist. Die Noppen greifen dann jeweils in eine der beschriebenen Nuten an den Seitenwänden der Kappe ein. Die Nuten sind an ihrem von der Druckrichtung abgewandten Ende verschlossen, so dass der jeweilige Noppen an dem Grundkörper nach dem Erreichen des maximalen Hubes der Kappe an dem verschlossenen Ende der jeweiligen Nut entgegen zur Druckrichtung anliegt.

Schließlich ist mit Ausgestaltungen der Erfindung vorgesehen, dass die Rastelemente der vorher beschriebenen Bauart und ihrer Ausgestaltungen in einer Schaltkupplung eingesetzt sind, wobei die Rastelemente in den Schaltkupplungen mit Synchronisierung bevorzugt als Druckstücke ausgelegt sind.

### Kurze Beschreibung der Zeichnungen

Die Erfindung ist nachfolgend anhand von Ausführungsbeispielen näher erläutert. Es zeigen:
- Figuren 1a und 1b: eine Anwendung eines Ausführungsbeispiels der Erfindung in einer Schaltkupplung mit einer Synchronisiereinheit im Schnitt, wobei Figur 1 a die Schaltmuffe in ihrer neutralen Position und Figur 1 b die Schaltmuffe in einer geschalteten Stellung zeigt,
- Figur 2: die Arretierung bzw. das Druckstück nach Figur 1 im Schnitt und
- Figur 3: ein weiteres Ausführungsbeispiel eines Rastelementes gemäß Erfindung im Schnitt.

### Detaillierte Beschreibung der Zeichnungen

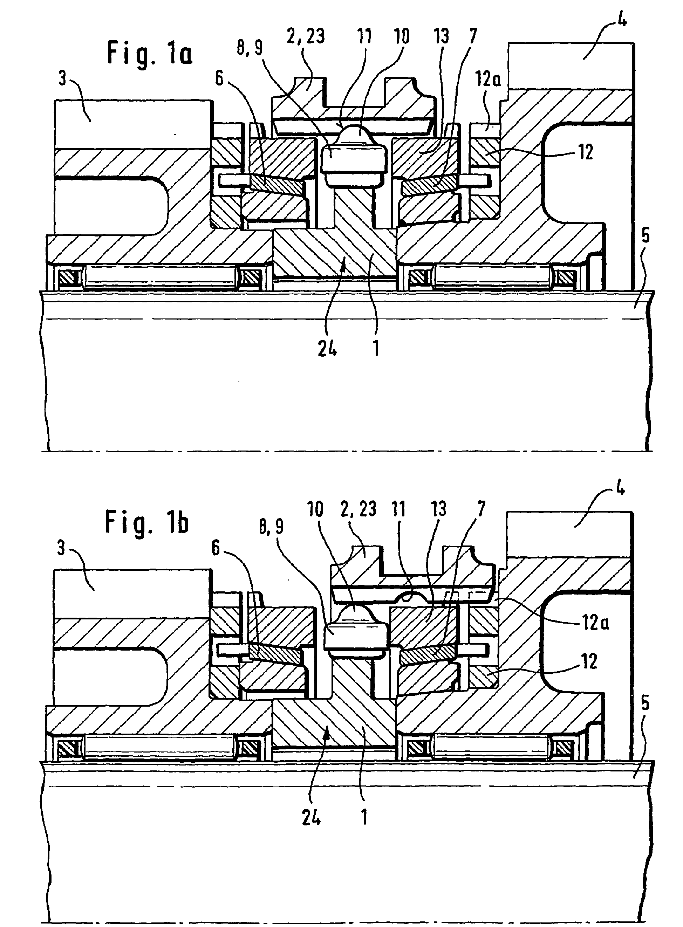

Die Figuren 1a und 1b zeigen eine Synchronkupplung 24 aus einem Muffenträger 1 und aus einer Schaltmuffe 2 zum wahlweisen Kuppeln der Gangräder 3 und 4. Die Gangräder 3, 4 sind drehbar aber längs fest auf einer Schaltwelle 5 gelagert. Der Muffenträger 1 sitzt verdrehfest sowie längs fest auf der Schaltwelle 5 und trägt auf seinem Außenumfang das Getriebeteil 23 in Form der Schaltmuffe 2. Die Schaltmuffe 2 ist mittels einer Verzahnung drehfest zu dem Muffenträger 1 und damit zur Schaltwelle 5 aber längs wahlweise in Richtung eines der Gangräder 3 oder 4 verschiebbar auf dem Muffenträger 1 angeordnet. An jeder Seite des Muffenträgers 1 ist längs zwischen dem Muffenträger 1 und dem Gangrad 3, 4 jeweils ein Satz 6, 7 Synchronringe angeordnet.

Der Muffenträger 1 nimmt an seinem Umfang mindestens drei Rastelemente 8 auf. Das Rastelement 8 verrastet an der Schaltmuffe 2 in ihrer neutralen Stellposition nach Figur 1 a. Das Rastelement 8 ist als ein Druckstück 9 ausgelegt. In der neutralen Stellposition stützt sich das Rastelement 8 an dem Muffenträger 1 radial ab und spannt mit einer Kappe 10 gegen die Schaltmuffe 2 vor. Dabei greift das Rastelement 8 mit der Kappe 10 in eine Rastvertiefung 11 an der Schaltmuffe 2 ein.

Die aus der neutralen Stellposition nach Figur 1 a in die geschaltete Position (Figur 1b) längs auf dem Muffenträger 1 verschobene Schaltmuffe 2 greift in eine Kupplungsverzahnung 12a einer mit dem Gangrad 4 fest verbundenen Kupplungsscheibe 12 ein. Die Schaltwelle 5 ist über den Muffenträger 1 und die Schaltmuffe 2 mit dem Gangrad 4 drehfest verbunden, wodurch der dem Gangrad 4 zugeordnete Gang geschaltet ist. Bei der Schaltbewegung der Schaltmuffe 2 in die geschaltete Position nimmt die Schaltmuffe 2 zunächst das in die Rastvertiefung 11 eingreifende Rastelement 8 längs mit und verschiebt das Rastelement 8 gegen den äußeren Synchronring 13 des Satzes 7. Der Prozess der Vorsynchronisation ist eingeleitet.

Die weiter in Richtung der Kupplungsverzahnung 12a bewegte Schaltmuffe 2 zwingt die Kappe 10 des sich an dem äußeren Synchronring 13 abstützenden Druckstücks 9 aus der Rastvertiefung 11. Die Kappe 10 federt dabei radial ein. Beim Lösen des Ganges bewegt sich die Schaltmuffe 2 aus der Stellung nach Figur 1 b zurück in die neutrale Stellposition nach Figur 1 a. Dabei greift die mit Vorspannung an der Schaltmuffe 2 anliegende Kappe 10 erneut in die Rastvertiefung 11 ein.

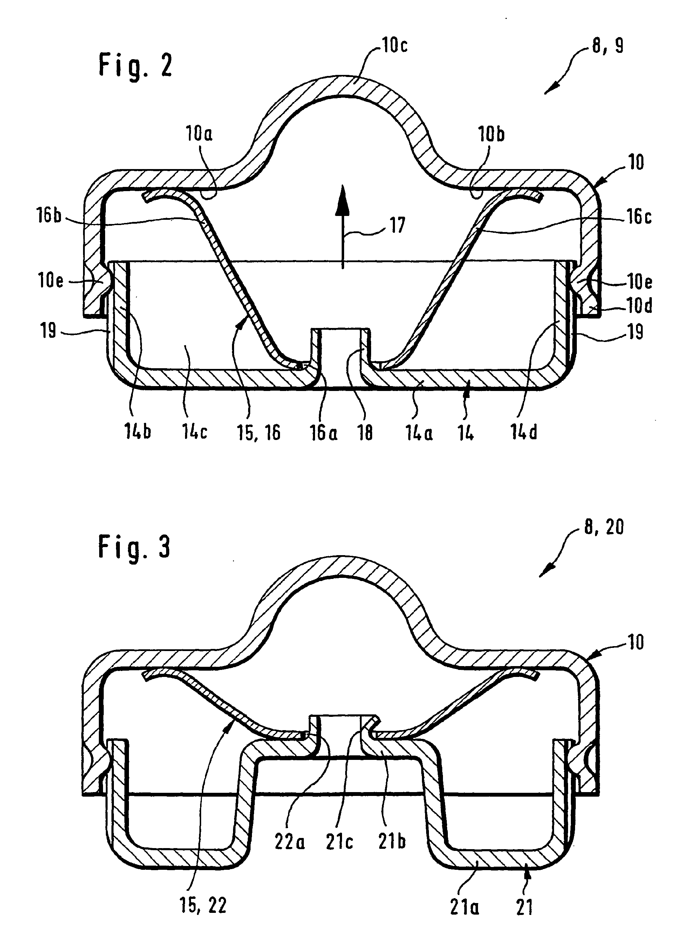

Figur 2 zeigt einen Längsschnitt durch das Rastelement 8. Das Rastelement 8 besteht aus der Kappe 10, einem Grundkörper 14 und einem Federelement 15 in Form eines Federbügels 16. Der Grundkörper 14 ist schalenförmig mit einem quer zur mit dem Pfeil 17 gekennzeichneten Druckrichtung ausgerichteten Boden 14a. Von dem Boden 14a sind Wände in Richtung der Kappe 10 abgewinkelt, wobei in der Schnittdarstellung nur die Wände 14b, 14c und 14d bildlich dargestellt sind. Der Federbügel 16 sitzt auf einem aus dem Boden 14a in Richtung der Kappe 10 in das Rastelement 8 durchgestellten hohlen Ansatz 18. Der Ansatz 18 ist einteilig mit dem Grundkörper 14 ausgebildet. Für den Sitz des Federbügels 16 auf dem Ansatz 18 weist der Federbügel 16 ein Durchgangsloch 16a auf. Der Federbügel ist mit zwei Schenkeln 16b und 16c gegen die Kappe 10 vorgespannt. Dazu erstreckt sich jeder der Schenkel 16b, 16c zunächst seitlich von dem Ansatz 18 weg und verläuft dann in Richtung der Kappe 10. Die freien und leicht abgebogenen Enden der Schenkel 16b, 16c liegen dabei an zu dem Boden 14a planparallelen Stützflächen 10a und 10b der Kappe 10 an. Die Stützflächen 10a schließen sich seitlich an eine kalottenförmig ausgebildete sowie nach außen hervorstehende Auswölbung 10c an der Kappe 10 an. Mit der Auswölbung 10c greift das Rastelement 8 in die Rastvertiefung 11 der Schaltmuffe 2 (Figur 1 a) ein.

Die Kappe 10 weist einen entgegengesetzt zur mit dem Pfeil 17 gekennzeichneten Druckrichtung abgewinkelten und die Wände 14b, 14c, 14d zumindest teilweise umfassenden Rand 10d auf. Aus dem Rand 10d stehen zwei sich an dem Rand 10d einander gegenüberliegende Noppen 10e quer zur Druckrichtung hervor. Jeder der Noppen 10e greift in jeweils eine in die Druckrichtung verlaufende sowie in Druckrichtung auf die Kappe 10 zu an ihrem Ende verschlossene nutförmige Vertiefung 19 an den Wänden 14b und 14d ein. Die Vertiefung 19 ist endseitig in Richtung der Kappe 10 verschlossen, wodurch die Noppen 10e entgegen der Druckrichtung den Grundkörper 14 in der Vertiefung 19 hintergreifen und somit die Kappe 10 an dem Grundkörper 14 gegen die Vorspannung des Federbügels 16 halten.

Figur 3 zeigt ein weiteres Ausführungsbeispiel eines erfindungsgemäßen Rastelements 8 in Form eines Druckstücks 20. Das Druckstück 20 besteht aus einem Grundkörper 21, der Kappe 10 und dem als Federbügel 22 ausgeführten Federelement 15. Der Boden 21 a des Grundkörpers 21 weist ein in Richtung der Kappe 10 in das Druckstück 20 ragendes Podest 21 b auf. Das Podest 21 b ist in das Druckstück 20 aus dem Boden 21 a hervorstehend geformt. Der Federbügel 22 ist mittels einer Nietverbindung an dem Grundkörper 21 befestigt. Die Nietverbindung ist durch einen aus dem Podest 21 b in Richtung der Kappe 10 durchgestellten sowie durch ein Loch 22a des Federbügels 22 ragenden hohlen Ansatz 21 c aus dem Material des Grundkörpers 21 gebildet. Der Ansatz 21 c ragt durch das Loch 22a hindurch und ist an der von dem Boden 21 a abgewandten Seite des Federbügels 22 über den freien Querschnitt des Loches 22a hinaus quer zur Druckrichtung des Federbügels 22 zumindest einseitig aufgeweitet.

### Bezugszeichen

- 1: Muffenträger
- 2: Schaltmuffe
- 3: Gangrad
- 4: Gangrad
- 5: Schaltwelle
- 6: Satz
- 7: Satz
- 8: Arretierung
- 9: Druckstück
- 10: Kappe
- 10a: Stützfläche
- 10b: Stützfläche
- 10c: Auswölbung
- 10d: Rand
- 10e: Noppen
- 11: Rastvertiefung
- 12: Kupplungsscheibe
- 12a: Kupplungsverzahnung
- 13: äußerer Synchronring
- 14: Grundkörper
- 14a: Boden
- 14b: Wand
- 14c: Wand
- 14d: Wand
- 15: Federelement
- 16: Federbügel
- 16a: Durchgangsloch
- 16b: Schenkel
- 16c: Schenkel
- 17: Pfeil
- 18: Ansatz
- 19: Vertiefung
- 20: Druckstück
- 21: Grundkörper
- 21a: Boden
- 21b: Podest
- 21c: Ansatz
- 22: Federbügel
- 22a: Loch
- 23: Getriebeteil
- 24: Synchronkupplung

## Patentansprüche

1. Rastelement (8, 20) zum Verrasten an einem Getriebeteil (23) in wenigstens einer Stellposition, wobei das Rastelement (8) einen aus Blech geformten Grundkörper (14, 21) aufweist, an dem sich wenigstens ein bügelartig ausgebildetes Federelement (15) abstützt und wobei das Federelement (15) elastisch in eine Druckrichtung gegen das Getriebeteil (23) vorspannt, **dadurch gekennzeichnet, dass** der Grundkörper (14, 21) schalenförmig mit einem quer zur Druckrichtung ausgerichteten Boden (14a, 21a) und mit von dem Boden (14a, 21a) abgewinkelt abgehenden Wänden (14b, 14c, 14d) ausgebildet ist, wobei der Grundkörper (14a, 21a) wenigstens teilweise mit einer dem Boden (14a, 21a) in Druckrichtung gegenüberliegenden Kappe (10) abgedeckt ist und wobei die Kappe (10) eine von dem Boden (14a, 21 a) wegweisende sowie aus der Kappe (10) in die Druckrichtung nach außen hervorstehende kalottenförmige Auswölbung (10c) aufweist sowie die Kappe (10) zu dem Grundkörper (14a, 21a) in Druckrichtung längsbeweglich an dem Grundkörper (14a, 21a) gehalten ist und dass das Federelement (15) von dem Grundkörper (14, 21) und der Kappe (10) wenigstens teilweise eingekapselt ist, wobei das Federelement (15), sich in dem Rastelement (8, 20) an dem Grundkörper (14, 21) abstützend, gegen die Kappe (10) vorgespannt ist.

2. Rastelement nach Anspruch 1, **dadurch gekennzeichnet, dass** das Federelement (15) ein Federbügel (16, 22) mit zwei Schenkeln (16b, 16c) ist.

3. Rastelement nach Anspruch 2, **dadurch gekennzeichnet, dass** die Schenkel (16b, 16c) gegen die Kappe (10) vorgespannt sind.

4. Rastelement nach Anspruch 3, **dadurch gekennzeichnet, dass** jeder der Schenkel (16b, 16c) an jeweils einer sich seitlich an die Auswölbung (10c) anschließenden sowie zu dem Boden (14a, 21a) planparallelen Stützfläche (10a, 10b) der Kappe (10) vorgespannt anliegt.

5. Rastelement nach Anspruch 3, **dadurch gekennzeichnet, dass** der Federbügel (16, 22) auf einem aus dem Boden (14a, 21a) in Richtung der Kappe (10) durchgestellten sowie in das Rastelement (8, 20) ragenden hohlen Ansatz (18, 21c) sitzt, wobei jeder der Schenkel (16b, 16c) sich anfangs seitlich von dem Ansatz (18, 21c) weg erstreckt und dann bogenförmig in Richtung der Kappe (10) abgeht.

6. Rastelement nach Anspruch 3, **dadurch gekennzeichnet, dass** der Federbügel (22) an der in Richtung der Kappe (10) weisenden Innenfläche des Bodens (21 a) des Grundkörpers (21) befestigt ist.

7. Rastelement nach Anspruch 6, **dadurch gekennzeichnet, dass** der Federbügel (22) mittels einer Nietverbindung an dem Grundkörper (21) befestigt ist.

8. Rastelement nach Anspruch 7, **dadurch gekennzeichnet, dass** die Nietverbindung durch einen aus dem Boden (21a) in Richtung der Kappe (10) durchgestellten sowie durch ein Loch (22a) des Federbügels (22) ragenden hohlen Ansatz (21 c) an dem Boden (21 a) des Grundkörpers (21) gebildet ist, wobei der Federbügel (22) an dem Boden (21 a) anliegt und der durch das Loch (22a) in das Rastelement (20) ragende Ansatz (21 c) an einer von dem Boden (21 a) abgewandten Seite des Federbügels (22) über den freien Querschnitt des Loches (22a) quer zur Druckrichtung hinaus aufgeweitet ist.

9. Rastelement nach Anspruch 3, **dadurch gekennzeichnet, dass** der Boden (21) teilweise podestartig in Richtung der Kappe (10) in das Rastelement (20) ragend durchgestellt ist.

10. Rastelement nach Anspruch 1, **dadurch gekennzeichnet, dass** die Kappe (10) einen entgegengesetzt zur Druckrichtung abgewinkelten und die Wände (14b, 14c, 14d) quer zur Druckrichtung zumindest teilweise umfassenden Rand (10d) aufweist, wobei aus dem Rand (10d) wenigstens zwei sich an dem Rand (10d) einander gegenüberliegenden Noppen (10e) quer zur Druckrichtung hervorstehen und wobei jeder der Noppen (10e) in jeweils eine in Druckrichtung verlaufende sowie in Druckrichtung auf die Kappe (10) zu endseitig abgeschlossene nutförmige Vertiefung (19) an jeweils einer der Wände des Grundkörpers (14, 21) eingreift, wodurch die Kappe (10) zu dem Grundkörper (14, 21) in Druckrichtung längsbeweglich an dem Grundkörper (14, 21) gehalten ist.

11. Rastelement nach Anspruch 1, **dadurch gekennzeichnet, dass** das Rastelement (8, 20), ein Druckstück (9, 20), eine Synchronkupplung (24) und das Getriebeteil (23) eine Schaltmuffe (2) der Synchronkupplung (24) ist, wobei das an der Schaltmuffe (2) in der Stellposition verrastete Druckstück (9, 20) zumindest zeitweise mit der Schaltmuffe (2) quer zur Druckrichtung wenigstens begrenzt durch die Schaltmuffe (2) mitbewegbar ist.

## Claims

1. Detent element (8, 20) for snapping onto a transmission element (23) in at least one adjusting position, said detent element (8) comprising a base body (14, 21) shaped out of sheet metal, on which base body at least one bow-shaped spring element (15) is supported, and this spring element (15) is biased elastically in a pressure direction against the transmission element (23), **characterised in that** the base body (14, 21) has a dish-shaped configuration with a bottom (14a, 21a) oriented crosswise to the pressure direction and with angled side walls (14b, 14c, 14d) starting from the bottom (14a, 21 a), the base body (14a, 21 a) being at least partially covered by a cap (10) situated opposite the bottom (14a, 21a) in the pressure direction, said cap (10) comprising a cup-shaped convexity (10c) pointing away from the bottom (14a, 21 a) and projecting outwards from the cap (10) in the pressure direction, and said cap (10) being retained on the base body (14a, 21 a) for longitudinal displacement relative to the base body (14a, 21 a) in the pressure direction, and **in that** the spring element (15) is at least partially encapsulated by the base body (14, 21) and the cap (10), and the spring element (15), while being supported within the detent element (8, 20) on the base body (14, 21) is biased against the cap (10).

2. Detent element according to claim 1, **characterised in that** the spring element (15) is a spring dip (16, 22) with two arms (16b, 16c).

3. Detent element according to claim 2, **characterised in that** the arms (16b, 16c) are biased against the cap (10).

4. Detent element according to claim 3, **characterised in that** each arm (16b, 16c) bears under bias against a respective support surface (10a, 10b) of the cap (10), which support surface (10a, 10b) extends laterally from the convexity (10c) and is parallel to the bottom (14a, 21 a).

5. Detent element according to claim 3, **characterised in that** the spring dip (16, 22) is seated on a hollow extension (18, 21 c) that is stamped out of the bottom (14a, 21a) in the direction of the cap (10) and projects into the detent element (8, 20), each of the legs (16b, 16c) extending at first laterally away from the extension (18, 21 c) and then in a bow shape in the direction of the cap (10).

6. Detent element according to claim 3, **characterised in that** the spring clip (22) is fixed on the inner surface of the bottom (21 a) of the base body (21), which inner surface points in the direction of the cap (10).

7. Detent element according to claim 6, **characterised in that** the spring clip (22) is fixed on the base body (21) by a riveted joint.

8. Detent element according to claim 7, **characterised in that** the riveted joint is formed on the bottom (21 a) of the base body (21) by a hollow extension (21 c) that is stamped out of the bottom (21 a) in the direction of the cap (10) and projects through a hole (22a) of the spring clip (22), the spring clip (22) bearing against the bottom (21 a), and the extension (21 c) that extends through the hole (22a) into the detent element (20) being widened crosswise to the pressure direction beyond the dear cross-section of the hole (22a) on a side of the spring clip (22) turned away from the bottom (21 a).

9. Detent element according to claim 3, **characterised in that** the bottom (21) is stamped partially in the shape of a pedestal in the direction of the cap (10) to project into the detent element (20).

10. Detent element according to claim 1, **characterised in that** the cap (10) comprises an edge (10d) that is angled in a direction opposite to the pressure direction and at least partially surrounds the walls (14b, 14c, 14d) crosswise to the pressure direction, at least two knobs (10e) that are situated opposite each other on the edge (10d) project from the edge crosswise to the pressure direction, each of the knobs (10e) engages into a respective groove-like depression (19) that is situated on one of the walls of the base body (14, 21) and extends in the pressure direction while being closed at its end in the pressure direction towards the cap (10), so that the cap (10) is retained on the base body (14, 21) for longitudinal displacement relative to the base body (14, 21) in the pressure direction.

11. Detent element according to claim 1, **characterised in that** the detent element (8, 20) is a thrust member (9, 20) of a synchroniser clutch (24) and the transmission element (23) is a gearshift sleeve (2) of the synchroniser clutch (24), and the pressure member (9, 20) snapped onto the gearshift sleeve (2) in the adjusting position can be entrained by the gearshift sleeve (2) at least intermittently and at least in a limited manner crosswise to the pressure direction.

## Revendications

1. Elément d'arrêt (8, 20) pour encliquetage sur un élément de transmission (23) dans au moins une position d'ajustage, ledit élément d'arrêt (8) comprenant un corps de base (14, 21) formé en tôle sur lequel s'appuie au moins un élément ressort (15) en forme d'étrier, et l'élément ressort (15) étant précontraint élastiquement dans une direction de pression contre l'élément de transmission (23), **caractérisé en ce que** le corps de base (14, 21) est configuré sous la forme de cuvette avec un fond (14a, 21 a) orienté en travers de la direction de pression et avec des parois (14b, 14c, 14d) qui sont repliées à partir du fond (14a, 21a), ledit corps de base (14a, 21 a) étant recouvert au moins partiellement par un chapeau (10) qui est situé vis-à-vis du fond (14a, 21a) dans la direction de pression, ledit chapeau (10) comprenant un bombement (10c) en forme de cuvette qui est orienté à l'opposé du fond ((14a, 21a) et fait saillie à partir du chapeau (10) vers l'extérieur dans la direction de pression, le chapeau (10) étant retenu sur le corps de base (14a, 21a) en mouvement longitudinal dans la direction de pression par rapport aux corps de base (14a, 21a), et **en ce que** l'élément ressort (15) est encapsulé, au moins partiellement, par le corps de base (14, 21) et par le chapeau (10), et que l'élément ressort (15) est précontraint contre le chapeau (10) en étant supporté à l'intérieur de l'élément d'arrêt (8, 20) sur le corps de base (14, 21).

2. Elément d'arrêt selon la revendication 1, **caractérisé en ce que** l'élément ressort (15) est un étrier ressort (16, 22) ayant deux bras (16b, 16c).

3. Elément d'arrêt selon la revendication 2, **caractérisé en ce que** les bras (16b, 16c) sont précontraints contre le chapeau (10).

4. Elément d'arrêt selon la revendication 3, **caractérisé en ce que** chaque bras (16b, 16c) est précontraint contre une surface respective de support (10a, 10b) du chapeau (10), ladite surface de support (10a, 10b) se raccordant latéralement au bombement (10c) en s'étendant parallèlement au fond (14a, 21 a).

5. Elément d'arrêt selon la revendication 3, **caractérisé en ce que** l'étrier ressort (12, 22) est assiégé sur un prolongement creux (18, 21 c) qui est estampé à partir du fond (14a, 21a) en direction du chapeau (10) et qui s'étend dans l'élément d'arrêt (8, 20), et chacun des bras (16b, 16c) s'étend d'abord latéralement en s'éloignant du prolongement (18, 21 c) et, puis, en forme d'arc, en direction du chapeau (10).

6. Elément d'arrêt selon la revendication 3, **caractérisé en ce que** l'étrier ressort (22) est fixé sur la surface intérieure du fond (21 a) du corps de base (21), laquelle surface intérieure est orientée en direction du chapeau (10).

7. Elément d'arrêt selon la revendication 6, **caractérisé en ce que** l'étrier ressort (22) est fixé sur le corps de base (21) par une rivure.

8. Elément d'arrêt selon la revendication 7, **caractérisé en ce que** la rivure est formée sur le fond (21 a) du corps de base (21) par un prolongement creux (21 c) qui est estampé à partir du fond (21 a) en direction du chapeau (10) et s'étend au travers d'un trou (22a) de l'étrier ressort (22), l'étrier ressort (22) s'appuie contre le fond (21 a), et, d'un côté de l'étrier ressort (22) opposé au fond (21 a), le prolongement (21 c), qui s'étend au travers du trou (22a) dans l'élément d'arrêt (20), est élargi, au delà de la section droite libre du trou (22a) en travers de la direction de pression.

9. Elément d'arrêt selon la revendication 3, **caractérisé en ce que** le fond (21) est estampé, partiellement en forme de plateforme, en direction du chapeau (10) et s'étend dans l'élément d'arrêt (20).

10. Elément d'arrêt selon la revendication 1, **caractérisé en ce que** le chapeau (10) comprend un collet (10d) qui est replié à l'opposé de la direction de pression et entoure les parois (14b, 14c, 14d), au moins partiellement, en travers de la direction de pression, au moins deux boutons (10e), qui sont situés vis-à-vis, l'un de l'autre, sur le collet (10d), font saillie à partir du collet (10d) en travers de la direction de pression, chaque bouton (10d) s'engage dans une cavité (19) respective en forme de rainure qui est située sur l'une des parois du corps de base (14, 21) et qui s'étend dans la direction de pression en étant fermée à son bout dans la direction de pression vers le chapeau (10), de sorte que le chapeau (10) est retenu sur le corps de base (14, 21) en déplacement longitudinal par rapport au corps de base (14, 21) dans la direction de pression.

11. Elément d'arrêt selon la revendication 1, **caractérisé en ce que** l'élément d'arrêt (8, 20) est un membre de la poussée (9, 20) d'un embrayage de synchronisation (24) et l'élément de transmission (23) est un manchon de changement de vitesse (2) de l'embrayage de synchronisation (24), le membre de la poussée (9, 20) qui est encliqueté sur le manchon de changement de vitesse (2) dans la position d'ajustage pouvant être entraîné par le manchon de changement de vitesse (2), au moins de manière intermittente et limitée, en travers de la direction de pression.
